# FASCICULE DE BREVET EUROPEEN

(11) **EP 3 219 548 B1**
(45) Date de publication et mention de la délivrance du brevet: **06.07.2022**
(21) Numéro de dépôt: 17159911.1
(22) Date de dépôt: 08.03.2017
(51) Int. Cl.: B60Q 3/47, B60Q 3/44, B61D 29/00, F21V 23/04

(54) **DISPOSITIF DE GESTION DE L'ÉCLAIRAGE DANS UNE SALLE DE VÉHICULE DE TRANSPORT PUBLIC, NOTAMMENT DE VÉHICULE FERROVIAIRE**
VORRICHTUNG ZUR STEUERUNG DER BELEUCHTUNG IN EINEM RAUM EINES ÖFFENTLICHEN TRANSPORTFAHRZEUGS, INSBESONDERE EINES SCHIENENFAHRZEUGS
DEVICE FOR MANAGING THE LIGHTING IN A ROOM OF A PUBLIC TRANSPORT VEHICLE, IN PARTICULAR OF A RAIL VEHICLE

(30) Priorité: 08.03.2016 FR 1651926
(43) Date de publication de la demande: 20.09.2017
(73) Titulaire: ALSTOM Transport Technologies, 93400 Saint-Ouen (FR)
(72) Inventeur: TERRIER, Jean-Luc, 59880 Saint Saulve (FR); LE-BASTARD, Jean, 78000 Versailles (FR)
(74) Mandataire: Lavoix

(56) Documents cités:
- WO-A1-2015/130571
- DE-A1-102012 006 694
- DE-A1-102012 011 691
- DE-A1-102012 017 276
- DE-A1-102013 019 210
- JP-A- 2013 229 993
- US-A1- 2013 234 593

## Description

La présente invention concerne un dispositif de gestion de l'éclairage dans une salle de véhicule de transport public, notamment de véhicule ferroviaire.

On connaît déjà, dans l'état de la technique, un dispositif de gestion de l'éclairage dans une salle de véhicule ferroviaire, comportant un système d'éclairage variable agencé dans la salle. Des exemples de dispositif de gestion d'éclairage sont par exemple décrits dans JP 2013229993, DE 10 2013 019210 ou WO 2015/130571.

Le système d'éclairage peut prendre plusieurs configurations, généralement manuellement, et notamment une configuration de jour et une configuration de nuit, pour lesquelles la luminosité est différente. Le système d'éclairage comporte généralement également des dispositifs d'éclairage individuels, qui ne présentent que des configurations allumée ou éteinte.

L'invention a notamment pour but d'améliorer la situation, en proposant un dispositif de gestion d'éclairage permettant une meilleure adaptation de l'éclairage, et cela de manière automatique.

A cet effet, l'invention a notamment pour objet un dispositif de gestion de l'éclairage dans une salle de véhicule de transport public, selon la revendication 1.

Le dispositif selon l'invention prend en compte à la fois l'éclairage extérieur d'une part, et la présence ainsi que l'activité des passagers d'autre part, pour obtenir un éclairage intérieur optimisé en fonction de la situation.

Un dispositif de gestion d'éclairage selon l'invention peut comporter en outre l'une ou plusieurs des caractéristiques techniques suivantes, prises seules ou selon toutes les combinaisons techniquement envisageables.
- Le système d'éclairage comporte un dispositif d'éclairage global de la salle.
- Le système d'éclairage comporte une pluralité de dispositifs d'éclairage individuels, chacun étant agencé à proximité d'un siège agencé dans la salle.
- L'unité de commande est configurée pour commander chaque dispositif d'éclairage individuel en fonction de la présence et de l'activité d'un passager sur le siège correspondant.
- Le dispositif de gestion d'éclairage comporte des moyens d'indication d'un statut du véhicule, le statut étant choisi par exemple parmi : présent dans une gare, à l'arrêt hors d'une gare, au dépôt et en marche.
- L'unité de commande est configurée pour commander le système d'éclairage en fonction du statut du véhicule.

L'invention concerne également un procédé de gestion de l'éclairage dans une salle de véhicule de transport public, notamment de véhicule ferroviaire, au moyen d'un dispositif de gestion tel que défini précédemment, caractérisé en ce qu'il comporte :
- une étape de mesure des caractéristiques de la lumière à l'extérieur du véhicule, et de capture des images à l'intérieur de la salle, et
- une étape d'ajustement de l'éclairage dans la salle en fonction de la luminosité mesurée à l'extérieur du véhicule et des images capturées à l'intérieur de la salle.

Un procédé de gestion d'éclairage selon l'invention peut comporter en outre l'une ou plusieurs des caractéristiques techniques suivantes, prises seules ou selon toutes les combinaisons techniquement envisageables.
- Le procédé comprend une étape d'analyse des images capturées pour la détermination de la présence et de l'activité d'au moins un passager, l'ajustement de l'éclairage étant réalisé en fonction de cette présence et activité déterminées.
- L'ajustement de l'éclairage comporte la modification de l'intensité de l'éclairage et/ou de sa couleur et/ou de sa température de blanc.

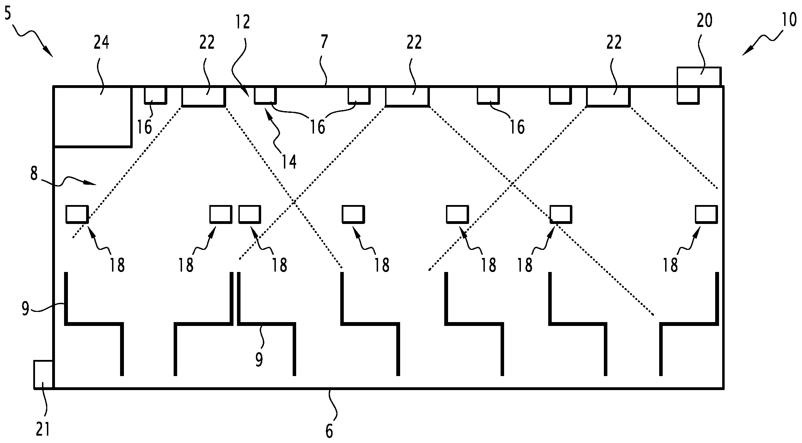

L'invention sera mieux comprise à la lecture de la description qui va suivre, donnée uniquement à titre d'exemple et faite en se référant à la figure annexée, représentant schématiquement une salle de véhicule de transport public, équipée d'un dispositif de gestion d'éclairage selon un exemple de mode de réalisation de l'invention.

On a représenté sur la figure une salle 5 d'une voiture de véhicule de transport public, notamment d'un véhicule ferroviaire.

La salle 5 comporte un sol 6 et un plafond 7 délimitant en hauteur un espace 8 d'accueil pour passagers. Des sièges 9 sont agencés dans cet espace d'accueil 8, chaque siège 9 étant destiné à accueillir un passager.

La salle 5 est équipée d'un dispositif 10 de gestion de l'éclairage dans la salle 5, comportant un système 12 d'éclairage variable agencé dans la salle 5.

Le système d'éclairage 12 selon l'invention est variable selon plusieurs paramètres, notamment l'intensité, la couleur, et la température de couleur de l'éclairage.

Le système d'éclairage 12 comporte avantageusement un dispositif 14 d'éclairage global de la salle 5, comportant une pluralité de luminaires 16 agencés au plafond 7 de la salle 5, ou à proximité de ce plafond 7. Le dispositif d'éclairage global 14 est destiné à diffuser de la lumière globalement dans la salle 5.

Le système d'éclairage 12 comporte également avantageusement une pluralité de dispositifs 18 d'éclairage individuels, chacun étant agencé à proximité de l'un des sièges 9, notamment au-dessus de ce siège 9. Chaque dispositif d'éclairage individuel 18 est destiné à diffuser de la lumière uniquement vers le siège 9 correspondant, pour ajuster l'éclairage au niveau de chaque passager.

Le dispositif de gestion d'éclairage 10 comporte par ailleurs au moins un capteur de lumière extérieure 20, propre à mesurer des caractéristiques de la lumière à l'extérieur du véhicule. Ces caractéristiques de lumière sont par exemple l'intensité lumineuse, la température de blanc, et l'orientation de la lumière.

L'intensité lumineuse est par exemple mesurée en lumen, au moyen d'un luxmètre de type classique.

Le dispositif de gestion d'éclairage 10 comporte en outre un capteur avant de lumière extérieure 21, tourné vers l'avant du véhicule, afin de prévoir les variations de lumière extérieure dues à l'avancée du véhicule.

Le dispositif de gestion d'éclairage 10 comporte par ailleurs au moins un dispositif 22 de capture d'images intérieur, propre à capturer des images à l'intérieur de la salle.

Le dispositif de gestion d'éclairage 10 comporte également une unité 24 de commande du système d'éclairage 12, configurée pour ajuster l'éclairage dans la salle 5 en fonction de la luminosité mesurée à l'extérieur du véhicule et des images capturées à l'intérieur de la salle 5.

Plus particulièrement, l'unité de commande 24 commande le dispositif d'éclairage global 14 en fonction notamment des caractéristiques de lumière mesurées à l'extérieur par le capteur de lumière extérieur 20.

Par exemple, en cas de forte luminosité extérieure, le dispositif d'éclairage global 14 peut être éteint. En cas de luminosité extérieure moyenne ou faible, le dispositif d'éclairage global 14 émet un éclairage de forte intensité. En cas de luminosité quasi nulle, c'est-à-dire la nuit, le dispositif d'éclairage global 14 émet un éclairage d'intensité réduite.

Le capteur avant de lumière extérieure peut également permettre d'anticiper le passage du véhicule dans un tunnel, ce qui permet de différentier le passage dans un tunnel et la nuit. Dans le cas d'un passage dans un tunnel, on peut prévoir d'adapter le dispositif d'éclairage global 14 pour que l'éclairage à l'intérieur de la salle 5 reste sensiblement identique entre l'extérieur et l'intérieur du tunnel.

Avantageusement, l'unité de commande 24 prend en compte l'orientation de la lumière extérieure, de sorte que le dispositif d'éclairage global émet un éclairage de plus forte intensité dans les zones d'ombre afin de compenser cette ombre. Ainsi, un côté de la salle 5, exposé au soleil, est éclairé avec une luminosité inférieure à l'autre côté de la salle 5, qui se trouve à l'ombre.

L'unité de commande 24 comporte par ailleurs des moyens d'analyse des images capturées, permettant de déduire, depuis les images capturées, la présence de passagers sur les sièges 9 et l'activité de ces passagers.

La présence d'un passager sur un siège 9 est déterminée de manière classique, par exemple en comparant une image du siège 9 inoccupé avec l'image capturée.

L'activité du passager est quant à elle déterminée en détectant certaines formes prédéfinies, et/ou en détectant des mouvements. A titre d'exemple, en détectant un écran allumé, on en déduira que le passager regarde un film ou travaille sur un ordinateur. En détectant une forme rectangulaire, on déduira que le passager lit un livre. Sans détection de forme particulière, mais en détectant des mouvements, on déduira que le passager est actif. Sans détection de forme particulière, et sans détecter de mouvements, on déduira que le passager dort.

L'unité de commande 24 est configurée pour commander chaque dispositif d'éclairage individuel 18 en fonction de la présence et de l'activité d'un passager sur le siège 9 correspondant.

Par exemple, lorsqu'aucun passager n'est présent sur le siège 9, le dispositif d'éclairage individuel 18 associé à ce siège 9 est éteint. Si les moyens d'analyse d'image ont déterminé qu'un passager présent sur le siège 9 consulte son ordinateur, le dispositif d'éclairage individuel 18 associé à ce siège 9 émet alors un éclairage d'intensité moyenne. Si les moyens d'analyse d'image ont déterminé qu'un passager présent sur le siège 9 lit un livre, le dispositif d'éclairage individuel 18 associé à ce siège 9 émet alors un éclairage de forte intensité. Si les moyens d'analyse d'image ont déterminé qu'un passager présent sur le siège 9 est actif, sans livre, le dispositif d'éclairage individuel 18 associé à ce siège 9 émet alors un éclairage d'intensité moyenne. Si les moyens d'analyse d'image ont déterminé qu'un passager présent sur le siège 9 est en train de dormir, le dispositif d'éclairage individuel 18 associé à ce siège 9 émet alors un éclairage de faible intensité ou d'intensité nulle.

D'autres paramètres peuvent être pris en compte pour l'adaptation de l'éclairage dans la salle 5.

Par exemple, le dispositif de gestion d'éclairage 10 comporte des moyens d'indication d'un statut du véhicule, le statut étant choisi parmi : présent dans une gare, à l'arrêt hors d'une gare, au dépôt et en marche. L'unité de commande 24 est alors configurée pour commander le système d'éclairage 12 en fonction du statut du véhicule.

Un éclairage spécifique peut ainsi être diffusé lorsque le train est en gare. Par exemple, au terminus, toutes les lumières peuvent être allumées à forte intensité, en couleur blanche.

Au dépôt, toutes les lumières peuvent être éteintes, puisqu'aucun passager n'est censé se trouver dans la salle 5.

On peut également prévoir des éclairages d'intensité et/ou de couleur différentes en fonction du statut du train, à l'arrêt ou en marche.

Il apparaît clairement que le dispositif de gestion d'éclairage 10 selon l'invention permet de modifier automatiquement l'ambiance lumineuse dans la salle 5 en fonction de divers paramètres définis précédemment, pour conserver à tout moment un confort visuel pour les passagers. Cette modification automatique est réalisée en temps réel, en fonction de l'évolution desdits paramètres.

On notera que certains paramètres peuvent être considérés en priorité par rapport aux autres. Par exemple, le statut du véhicule peut être considéré en premier lieu, les autres paramètres n'étant pris en considération que lorsque le véhicule est en marche.

Le dispositif de gestion d'éclairage 10 selon l'invention permet de mettre en oeuvre un procédé de gestion d'éclairage, comportant :
- une étape de mesure des caractéristiques de la lumière à l'extérieur du véhicule, et de capture des images à l'intérieur de la salle, et
- une étape d'ajustement de l'éclairage dans la salle en fonction de la luminosité mesurée à l'extérieur du véhicule et des images capturées à l'intérieur de la salle.

Le procédé de gestion d'éclairage comporte une étape d'analyse des images capturées pour la détermination de la présence et de l'activité d'au moins un passager, l'ajustement de l'éclairage étant réalisé en fonction de cette présence et activité déterminées.

Avantageusement, l'ajustement de l'éclairage comporte la modification de l'intensité de l'éclairage et/ou de sa couleur et/ou de sa température de blanc.

On notera que l'invention n'est pas limitée au mode de réalisation précédemment décrit, mais pourrait présenter diverses variantes complémentaires.

## Revendications

1. Dispositif (10) de gestion de l'éclairage dans une salle (5) de véhicule de transport public, notamment de véhicule ferroviaire, comportant un système d'éclairage variable (12) agencé dans la salle (5), **caractérisé en ce que** le dispositif de gestion (10) comporte:
- au moins un capteur de lumière extérieure (20), propre à mesurer des caractéristiques de la lumière à l'extérieur du véhicule, et au moins un dispositif de capture d'image intérieur (22), propre à capturer des images à l'intérieur de la salle (5), et
- une unité (24) de commande du système d'éclairage (12), configurée pour ajuster l'éclairage dans la salle (5) en fonction de la luminosité mesurée à l'extérieur du véhicule et des images capturées à l'intérieur de la salle (5),
- un capteur avant de lumière extérieure (21), tourné vers l'avant du véhicule, afin de prévoir les variations de lumière extérieure dues à l'avancée du véhicule.

2. Dispositif de gestion d'éclairage (10) selon la revendication 1, dans lequel le système d'éclairage (12) comporte un dispositif (14) d'éclairage global de la salle.

3. Dispositif de gestion d'éclairage (10) selon la revendication 1 ou 2, dans lequel le système d'éclairage (12) comporte une pluralité de dispositifs d'éclairage individuels (18), chacun étant agencé à proximité d'un siège (9) agencé dans la salle (5).

4. Dispositif de gestion d'éclairage (10) selon la revendication 3, dans lequel l'unité de commande (24) est configurée pour commander chaque dispositif d'éclairage individuel (18) en fonction de la présence et de l'activité d'un passager sur le siège (9) correspondant.

5. Dispositif de gestion d'éclairage (10) selon l'une quelconque des revendications précédentes, comportant des moyens d'indication d'un statut du véhicule, le statut étant choisi par exemple parmi : présent dans une gare, à l'arrêt hors d'une gare, au dépôt et en marche.

6. Dispositif de gestion d'éclairage (10) selon la revendication 5, dans lequel l'unité de commande (24) est configurée pour commander le système d'éclairage en fonction du statut du véhicule.

7. Procédé de gestion de l'éclairage dans une salle (5) de véhicule de transport public, notamment de véhicule ferroviaire, au moyen d'un dispositif (10) de gestion selon l'une quelconque des revendications précédentes, **caractérisé en ce qu'**il comporte :
- une étape de mesure des caractéristiques de la lumière à l'extérieur du véhicule, et de capture des images à l'intérieur de la salle, et
- une étape d'ajustement de l'éclairage dans la salle en fonction de la luminosité mesurée à l'extérieur du véhicule et des images capturées à l'intérieur de la salle.

8. Procédé de gestion d'éclairage selon la revendication 7, comprenant une étape d'analyse des images capturées pour la détermination de la présence et de l'activité d'au moins un passager, l'ajustement de l'éclairage étant réalisé en fonction de cette présence et activité déterminées.

9. Procédé de gestion d'éclairage selon la revendication 7 ou 8, dans lequel l'ajustement de l'éclairage comporte la modification de l'intensité de l'éclairage et/ou de sa couleur et/ou de sa température de blanc.

## Patentansprüche

1. Vorrichtung (10) zum Verwalten der Beleuchtung in einem Raum (5) eines Fahrzeugs des öffentlichen Verkehrs, insbesondere eines Schienenfahrzeugs, umfassend ein variables Beleuchtungssystem (12), das in dem Raum (5) angeordnet ist, **dadurch gekennzeichnet, dass** die Steuerungsvorrichtung (10) Folgendes umfasst:
- mindestens einen Außenlichtsensor (20), der geeignet ist, um Eigenschaften des Lichts außerhalb des Fahrzeugs zu messen, und mindestens eine Innenbild-Erfassungsvorrichtung (22), die geeignet ist, um Bilder im Innern des Raums (5) aufzunehmen, und
- eine Einheit (24) zum Steuern des Beleuchtungssystems (12), die konfiguriert ist, um die Beleuchtung in dem Raum (5) abhängig von der gemessenen Helligkeit außerhalb des Fahrzeugs und den im Inneren des Raums (5) aufgenommenen Bildern anzupassen,
- einen vorderen Außenlichtsensor (21), der der Vorderseite des Fahrzeugs zugewandt ist, um Änderungen des Außenlichts aufgrund der Vorwärtsbewegung des Fahrzeugs vorherzusagen.

2. Beleuchtungsverwaltungsvorrichtung (10) nach Anspruch 1, wobei das Beleuchtungssystem (12) eine Vorrichtung (14) für die globale Beleuchtung des Raums umfasst.

3. Beleuchtungsverwaltungsvorrichtung (10) nach Anspruch 1 oder 2, wobei das Beleuchtungssystem (12) eine Vielzahl von einzelnen Beleuchtungsvorrichtungen (18) umfasst, die jeweils in der Nähe eines in dem Raum (5) angeordneten Sitzes (9) angeordnet sind.

4. Beleuchtungsverwaltungsvorrichtung (10) nach Anspruch 3, wobei die Steuereinheit (24) konfiguriert ist, um jede einzelne Beleuchtungsvorrichtung (18) abhängig von der Anwesenheit und der Aktivität eines Passagiers auf dem entsprechenden Sitz (9) zu steuern.

5. Beleuchtungsverwaltungsvorrichtung (10) nach einem der vorherigen Ansprüche, umfassend Einrichtungen zur Anzeige eines Status des Fahrzeugs, wobei der Status beispielsweise ausgewählt ist aus: vorhanden in einem Bahnhof, im Stillstand außerhalb eines Bahnhofs, im Betriebshof und in Fahrt.

6. Beleuchtungsverwaltungsvorrichtung (10) nach Anspruch 5, wobei die Steuereinheit (24) konfiguriert ist, um das Beleuchtungssystem abhängig von dem Status des Fahrzeugs zu steuern.

7. Verfahren zum Verwalten der Beleuchtung in einem Raum (5) eines Fahrzeugs des öffentlichen Verkehrs, insbesondere eines Schienenfahrzeugs, mittels einer Vorrichtung (10) zum Verwalten nach einem der vorherigen Ansprüche, **dadurch gekennzeichnet, dass** es Folgendes umfasst:
- einen Schritt zum Messen der Eigenschaften des Lichts außerhalb des Fahrzeugs und zum Aufnehmen von Bildern im Innern des Raums, und
- einen Schritt zum Anpassen der Beleuchtung in dem Raum abhängig von der gemessenen Helligkeit außerhalb des Fahrzeugs und den im Inneren des Raums aufgenommenen Bildern.

8. Verfahren zum Verwalten der Beleuchtung nach Anspruch 7, umfassend einen Schritt einer Analyse der aufgenommen Bilder zum Bestimmen der Anwesenheit und der Aktivität mindestens eines Passagiers, wobei die Anpassung der Beleuchtung abhängig von dieser bestimmten Anwesenheit und Aktivität erfolgt.

9. Verfahren zum Verwalten der Beleuchtung nach Anspruch 7 oder 8, wobei die Anpassung der Beleuchtung die Änderung der Stärke der Beleuchtung und/oder ihrer Farbe und/oder ihrer Weißtemperatur umfasst.

## Claims

1. A lighting management device (10) for managing the lighting in a compartment of a public transport vehicle (5), in particular a railway vehicle, that comprises a variable lighting system (12) arranged in the compartment (5), **characterised in that** the lighting management device (10) includes:
- at least one exterior light sensor (20), that is capable of measuring the characteristics of the exterior light outside the vehicle, and at least one interior image capture device (22), that is capable of capturing images within the interior of the compartment (5); and
- a control unit (24) for controlling the lighting system (12), configured so as to adjust the lighting in the compartment (5) based on the brightness of the exterior light measured outside the vehicle and the images captured within the interior of the compartment (5),
- a front exterior light sensor 21, turned towards the front of the vehicle, in order to predict exterior light variations due to the advancing of the vehicle.

2. A lighting management device (10) according to claim 1, in which the lighting system (12) includes an overall lighting device for general overall lighting of the compartment (14).

3. A lighting management device (10) according to claim 1 or 2, in which the lighting system (12) includes a plurality of individual lighting devices (18), each being arranged in the proximity of a seat (9) arranged in the compartment (5).

4. A lighting management device (10) according to claim 3, in which the control unit (24) is configured in order to control each individual lighting device (18) based on the presence and activity of a passenger seated in the corresponding seat (9).

5. A lighting management device (10) according to any one of the preceding claims, that includes the status indication means for indicating the status of a vehicle, the status being chosen for example among: present in a train station; at a halt outside a train station; at the depot; and in motion.

6. A lighting management device (10) according to claim 5, in which the control unit (24) is configured in order to control the lighting system based on the status of the vehicle.

7. A lighting management method for managing the lighting in a compartment (5) of a public transport vehicle, in particular a railway vehicle, by means of a lightening management device (10) according to any one of the preceding claims, **characterised in that** it includes:
- a light measurement and image capture step for measuring the characteristics of the exterior light outside the vehicle, and capturing of images within the interior of the compartment, and
- a lighting adjustment step for adjusting the lighting in the compartment based on the brightness of the exterior light measured outside the vehicle and the images captured within the interior of the compartment.

8. A lighting management method according to claim 7, including an image analysis step for analysing the images captured in order to make a determination as to the presence and activity of at least one passenger, the adjustment of the lighting being performed on the basis of the said presence and activity determined.

9. A lighting management method according to claim 7 or 8, in which the adjustment of the lighting includes modification of the intensity of the lighting, and/or its colour and/or its white colour temperature.
